# EUROPEAN PATENT APPLICATION

(11) **EP 4 768 389 A1**
(43) Date of publication of application: **01.07.2026**
(21) Application number: 24858502.8
(22) Date of filing: 26.08.2024
(51) Int. Cl.: B64C 27/26, B64C 1/06

(54) **AIRCRAFT AND ARM THEREOF**

(30) Priority: 25.08.2023 CN 202311078055
(71) Applicant: Autoflight (Kunshan) Co., Ltd., Suzhou, Jiangsu 215345 (CN)
(72) Inventor: TIAN, Yu, Suzhou, Jiangsu 215345 (CN); CUI, Yongqiang, Suzhou, Jiangsu 215345 (CN)
(74) Representative: MERH-IP Matias Erny Reichl Hoffmann Patentanwälte PartG mbB
(86) International application number: PCT/CN2024/114452
(87) International publication number: WO 2025/044966

(57) **Abstract**

The present invention relates to the field of aircraft technology and discloses an aircraft and its arm. The aircraft arm, applicable to an aircraft, comprises an arm main body and an external extension part, which are integrally formed. The external extension part extends radially outward and forms a structure that gradually tapers along a first direction, wherein the external extension part comprises a streamlined surface structure to reduce aerodynamic drag during flight. The integral molding and connection of the arm main body and the vertical stabilizer in this disclosure can improve the stiffness of the vertical stabilizer surface, reduce the risk of loosening or of detaching of the vertical stabilizer, decrease the number of parts, and reduce weight.

## Description

### FIELD OF THE DISCLOSURE

The present invention relates to the field of aircraft, and particularly relates to an aircraft and its arm.

### BACKGROUND OF THE INVENTION

Currently, many aircraft arms and vertical stabilizers adopt a detachable installation mode. Due to assembly tolerances, detachable vertical stabilizers often result in gaps at the stabilizer surface, which easily induces vertical stabilizer flutter and is detrimental to flight stability. Because the detachable installation structure of the vertical stabilizer requires corresponding hardware to meet assembly needs, it often leads to a greater vertical stabilizer weight. Furthermore, installing vertical stabilizers in open terrain requires certain auxiliary tools, which is relatively cumbersome.

### SUMMARY OF THE INVENTION

The object of the present invention is to provide an aircraft and its arm. The integral molding and connection of the arm main body and the vertical stabilizer in the present invention can improve the stiffness of the vertical stabilizer surface and reduce the risk of loosening of the vertical stabilizer, while decreasing the number of parts and reducing weight.

To solve the above technical problem, the present invention provides an aircraft arm, applicable to an aircraft, comprising: an arm main body and an external extension part, wherein the arm main body and the external extension part are integrally formed, and the external extension part extends radially outward and forms a structure that gradually tapers along a first direction, wherein the external extension part comprises a streamlined surface structure to reduce aerodynamic drag during flight of the aircraft.

Further, the present invention provides an aircraft, comprising a fuselage and the aforementioned aircraft arm, wherein the aircraft arm is assembled to the fuselage.

Preferably, the external extension part comprises a first part and a second part, wherein the first part is integrally formed with the arm main body, and the second part is a movable part and is capable of rotating freely around the first part to control an airflow passing over a surface of the first part during flight, thereby adjusting a flight direction of the aircraft.

Preferably, the first direction is a direction away from the arm main body.

Preferably, the external extension part extends downward and a thickness thereof gradually decreases.

Preferably, the arm main body and the external extension part are both composed of carbon fiber, the arm main body is formed by splicing at least two carbon fiber shells vertically, and the external extension part is formed by splicing at least two carbon fiber shells horizontally.

Preferably, the arm main body comprises a front-end portion, a middle portion, and a rear-end portion, wherein the rear-end portion is integrally formed with the external extension part.

Preferably, the middle portion comprises a wing assembly notch, wherein the wing assembly notch comprises slanted segments on both sides and a flat segment in the middle, and wherein the wing assembly notch is configured for cooperative connection with a fuselage.

Preferably, the aircraft arm further comprises an arm opening, wherein the arm opening communicates with an interior of the arm, wherein a port of the arm opening is provided with an outwardly expanding bowl-shaped structure.

Preferably, a cross-section of the arm main body at various positions has an inverted teardrop shape.

The integral molding and connection of the arm main body and the vertical stabilizer in the present disclosure can improve the stiffness of the vertical stabilizer surface and reduce the number of large components to be installed in open terrain. Furthermore, the positioning structures and the locking structures required for installing the vertical stabilizer can be omitted, thereby reducing the risk of loosening, decreasing weight, and eliminating the costs of related parts.

### BRIEF DESCRIPTION OF DRAWINGS

FIG. 1 shows a schematic structural diagram of an aircraft arm according to a first embodiment of the present invention.
FIG. 2 shows a schematic structural diagram of a rear-end portion of the aircraft arm according to the first embodiment of the present invention.
FIG. 3 shows a schematic structural diagram of an aircraft according to a second embodiment of the present invention.

### DETAILED DESCRIPTION

The following embodiments further illustrate the technical solutions of the present invention. It can be understood that the specific embodiments described herein are only used to explain the present invention. Additionally, it should be noted that, for ease of description, the drawings only show parts related to the present invention and not all parts.

In the description of the present invention, unless otherwise specified, terms such as "install", "connect", and "attach" should be interpreted broadly. For example, connections may be fixed or detachable, mechanical or electrical, direct or indirect via intermediate components, or internal connections between two elements. Those skilled in the art can understand the specific meanings of these terms in the present invention based on the context.

In the present invention, unless otherwise specified and defined, the first feature being "on" or "under" the second feature may include the first and second features being in direct contact, or may include the first and second features not being in direct contact but being in contact through additional features between them. Moreover, the first feature being "on", "above", or "over" the second feature includes the first feature being directly above or obliquely above the second feature, or merely indicates that the horizontal height of the first feature is higher than that of the second feature. The first feature being "under", "below", or "beneath" the second feature includes the first feature being directly below or obliquely below the second feature, or merely indicates that the horizontal height of the first feature is lower than that of the second feature.

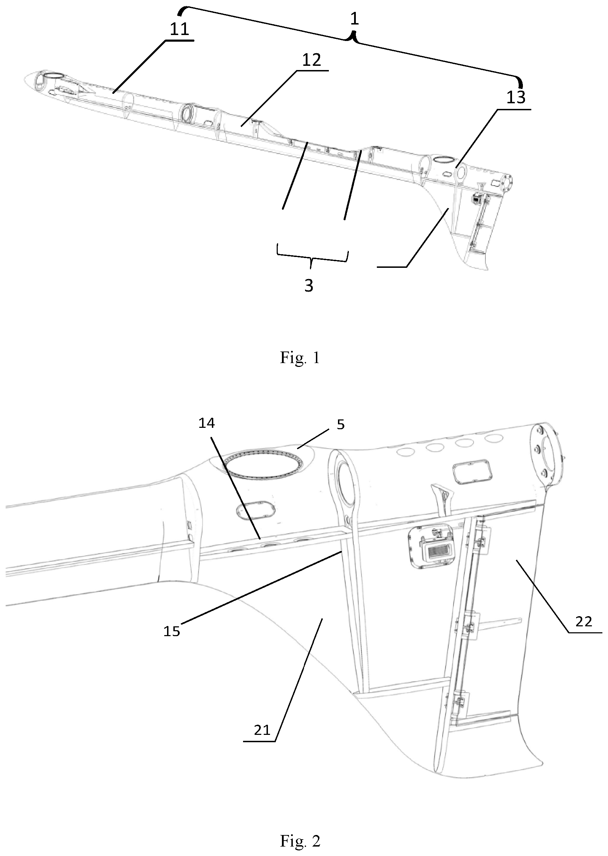

The first embodiment of the present disclosure is described below with reference to the accompanying drawings. As shown in FIG. 1 and FIG. 2, the aircraft arm according to the first embodiment of the present disclosure is applicable to an aircraft and comprises: an arm main body 1 and an external extension part 2, wherein the arm main body 1 and the external extension part 2 are integrally formed, and the external extension part 2 extends radially outward and presents a structure that gradually tapers along a first direction; wherein the external extension part 2 comprises a streamlined surface structure to reduce aerodynamic drag during flight of the aircraft.

Specifically, the arm main body 1 comprises a front-end portion 11, a middle portion 12, and a rear-end portion 13, wherein the rear-end portion 13 is integrally formed with the external extension part 2. However, it can be understood that the external extension part 2 may also be connected to other portions, such as the middle portion 12. The interior of the arm comprises a plurality of transverse support beams 14 and a plurality of vertical support beams 15 for supporting the arm main body 1, wherein some of the support beams 14 and of the support beams 15 are interlaced with each other to enhance the structural strength of the arm. The external extension part 2 comprises a first part 21 and a second part 22, wherein the first part 21 is a stabilizer surface part and is integrally formed with the arm main body 1, and the second part 22 is a movable part and is capable of rotating freely around the first part 21 to control an airflow passing over a surface of the first part 21 during flight, thereby adjusting a flight direction of the aircraft. The external extension part 2 may serve as a vertical stabilizer connected to the aircraft arm. A servo may be installed inside the first part 21, and the second part 22 serves as a rudder surface capable of rotating left and right, which is controlled by the servo within the stabilizer surface part to achieve a left-right rotation, thereby adjusting the airflow direction. The first direction is a direction away from the arm main body 1. Preferably, the first direction is perpendicular to the aircraft's forward direction. The vertical stabilizer gradually tapers toward the direction away from the arm main body 1, and at least a leading edge side thereof presents a streamlined surface structure to reduce aerodynamic drag during flight of the aircraft. In addition, the external extension part 2 extends downward and a thickness thereof gradually decreases. Preferably, both the arm main body 1 and the external extension part 2 are composed of carbon fiber. The carbon fiber material further possesses excellent mechanical properties and a low coefficient of thermal expansion, enabling it to withstand extreme environments such as high temperature, high pressure, and mechanical vibration, and its weight is also highly beneficial for the lightweight design of the aircraft. The arm main body 1 may be formed by splicing two carbon fiber shells vertically, and the external extension part 2 is formed by splicing two carbon fiber shells horizontally, which maximizes the benefits for composite material processing and reduces production costs while ensuring the strength of the fuselage. The integral molding and connection of the arm main body and the vertical stabilizer can improve the stiffness of the vertical stabilizer surface and reduce the number of large components to be installed in open terrain. Furthermore, the positioning structures and the locking structures required for installing a vertical stabilizer can be omitted, thereby reducing the risk of loosening, decreasing weight, and eliminating the costs of related parts.

Further, the middle portion 12 comprises a wing assembly notch 3, the wing assembly notch 3 comprises slanted segments 31 on both sides and a flat segment 32 in the middle. The wing assembly notch 3 is configured for cooperative connection with a fuselage. Further, the arm additionally comprises an arm opening 5 communicating with the interior of the arm, wherein a port of the arm opening 5 is provided with an outwardly expanding bowl-shaped structure. A rotor motor of the aircraft can be inserted into the interior of the arm through the arm opening 5, positioning a centrifugal fan on an upper part of the rotor motor within the bowl-shaped structure of the arm opening 5 (while remaining exposed to the outside of the arm) without exposing a windward surface, thereby ensuring the streamlined profile of the upstream side and avoiding aerodynamic drag, which would be caused by the centrifugal fan being exposed from the arm. Further, a cross-section of the arm main body 1 at various positions has an inverted teardrop shape, particularly at positions on both sides of the arm's rotor motor. The airflow generated by the arm's rotor motor can flow downward along the teardrop shape, and the teardrop shape can avoid the generation of vortices beneath the arm, thereby preventing unnecessary arm vibration.

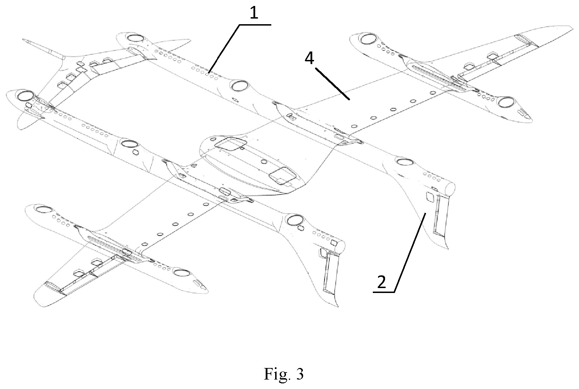

A second embodiment of the present disclosure further provides an aircraft. As shown in FIG. 3, the aircraft comprises a fuselage 4 and the aforementioned arm main body 1, wherein the arm main body 1 is assembled to the fuselage 4. In the aircraft of the embodiments of the present disclosure, the integral molding and connection of the arm main body and the vertical stabilizer can improve the stiffness of the vertical stabilizer surface and reduce the number of large components to be installed in open terrain. Furthermore, the positioning structures and the locking structures required for installing a vertical stabilizer can be omitted, thereby reducing the risk of loosening, decreasing weight, and eliminating the costs of related parts.

The above embodiments are only illustrative of the principles and effects of the present invention. Anyone skilled in the art may modify or change the above embodiments without departing from the purpose of the present invention. Therefore, all equivalent modifications or changes made by those skilled in the art without departing from the disclosed purpose of the present invention shall fall within the scope of the claims of the present invention.

## Claims

1. An aircraft arm, applicable to an aircraft, comprising: an arm main body (1) and an external extension part (2), wherein the arm main body (1) and the external extension part (2) are integrally formed, and the external extension part (2) extends radially outward and forms a structure that gradually tapers along a first direction, wherein the external extension part (2) comprises a streamlined surface structure to reduce aerodynamic drag during flight of the aircraft.

2. The aircraft arm according to claim 1, wherein the external extension part (2) comprises a first part (21) and a second part (22), wherein the first part (21) is integrally formed with the arm main body (1), and the second part (22) is a movable part and is capable of rotating freely around the first part (21) to control an airflow passing over a surface of the first part (21) during flight, thereby adjusting a flight direction of the aircraft.

3. The aircraft arm according to claim 1, wherein the first direction is a direction away from the arm main body (1).

4. The aircraft arm according to claim 1, wherein the external extension part (2) extends downward and a thickness thereof gradually decreases.

5. The aircraft arm according to claim 1, wherein the arm main body (1) and the external extension part (2) are both composed of carbon fiber, the arm main body (1) is formed by splicing at least two carbon fiber shells vertically, and the external extension part (2) is formed by splicing at least two carbon fiber shells horizontally.

6. The aircraft arm according to claim 1, wherein the arm main body (1) comprises a front-end portion (11), a middle portion (12), and a rear-end portion (13), wherein the rear-end portion (13) is integrally formed with the external extension part (2).

7. The aircraft arm according to claim 6, wherein the middle portion (12) comprises a wing assembly notch (3), wherein the wing assembly notch (3) comprises slanted segments (31) on both sides and a flat segment (32) in the middle, and wherein the wing assembly notch (3) is configured for cooperative connection with a fuselage.

8. The aircraft arm according to claim 1, further comprising an arm opening (5), wherein the arm opening (5) communicates with an interior of the arm, wherein a port of the arm opening (5) is provided with an outwardly expanding bowl-shaped structure.

9. The aircraft arm according to claim 1, wherein a cross-section of the arm main body (1) at various positions has an inverted teardrop shape.

10. An aircraft, comprising a fuselage (4) and the aircraft arm according to any one of claims 1-9, wherein the aircraft arm is assembled to the fuselage (4).
